# EUROPÄISCHE PATENTANMELDUNG

(11) **EP 4 517 512 A1**
(43) Veröffentlichungstag der Anmeldung: **05.03.2025**
(21) Anmeldenummer: 23194815.9
(22) Anmeldetag: 01.09.2023
(51) Int. Cl.: G06F 3/16, F24C 7/08

(54) **VERFAHREN ZUR AUSGABE EINES AUDIOSIGNALS, ELEKTRISCHES HAUSHALTSGERÄT, SYSTEM UND COMPUTERPROGRAMMPRODUKT**

(71) Anmelder: Vorwerk & Co. Interholding GmbH, 42275 Wuppertal (DE)
(72) Erfinder: Echelmeyer, Benedikt, 44803 Bochum (DE); Dering, Ingo, 42929 Wermelskirchen (DE)
(74) Vertreter: Bals & Vogel Patentanwälte PartGmbB

(57) **Zusammenfassung**

Die Erfindung betrifft ein Verfahren (100) zur Ausgabe eines Audiosignals (20) bei einem elektrischen Haushaltsgerät (200), umfassend eine Bestimmung (110) einer Umgebungslautstärke (111), ein Berechnen (120) einer Ausgabelautstärke (121), wobei die Umgebungslautstärke (111) die Ausgabelautstärke (121) zumindest teilweise bestimmt, sowie ein Ausgeben (130) des Audiosignals (20) mit der Ausgabelautstärke (121). Ferner betrifft die Erfindung ein elektrisches Haushaltsgerät (200), ein System (400) und ein Computerprogrammprodukt.

## Beschreibung

Die Erfindung betrifft ein Verfahren, ein elektrisches Haushaltsgerät, ein System, sowie ein Computerprogrammprodukt gemäß dem jeweiligen unabhängigen Anspruch.

Die Küche wird zunehmend zu einem zentralen Ort der Wohnung, in dem nicht ausschließlich gekocht wird, sondern auch andere Aktivitäten und Begegnungen stattfinden. Durch den Trend zu offenen Wohnküchen entsteht eine komplexe Umgebung, in der oft eine ganze Reihe von Geräuschquellen angeordnet ist. Das bedeutet, dass regelmäßig nicht nur Küchengeräte und Vorrichtungen Geräusche abgeben, sondern beispielsweise auch die sich in der Küche befindenden Personen, Radios, Fernseher oder Bluetoothlautsprecher etc. Das kann das Erkennen von akustischen Signalen erschweren.

Eine weitere Herausforderung kann sich ergeben, wenn elektrische Haushaltsgeräte nicht in einem klassischen Wohnraum, sondern mobil, beispielsweise in einem Wohnmobil-Fahrzeug eingesetzt werden. Insbesondere kompakte elektrische Haushaltsgeräte, die multifunktional sind, können auch in kleinen, mobilen Küchen eingesetzt werden. Gerade in solchen Umgebungen kann es jedoch zu sehr unterschiedlichen Umgebungsgeräuschkulissen kommen, sodass die akustischen Ausgaben des elektrischen Haushaltsgerätes nicht immer für die Benutzer wahrnehmbar sind.

Darüber hinaus gewöhnen sich Personen zunehmend an die Verwendung sprachbasierter Assistenten, welche über ein akustisches Ein- und Ausgabeinterface steuerbar sind. Hierzu ist es jedoch notwendig, sowohl die Ausgaben der Vorrichtung zu verstehen als auch, dass die Sprache der Person erkannt werden kann.

Elektrische Haushaltsgeräte verursachen bei ihrer Verwendung in der Regel ebenfalls Geräusche, die in ihrer Intensität stark variieren können. Beispielsweise kann eine Dunstabzugshaube ein erhebliches Geräuschlevel erzeugen und damit andere Geräusche übertönen. Prinzipiell könnte bei der Ausgabe von Audiosignalen auch die Funktion des elektrischen Haushaltsgerätes reduziert oder ausgeschaltet werden, jedoch beeinträchtigt dies die Funktion.

Durch den von den vielen Geräuschquellen erzeugten, komplexen Klangteppich kann es dazu kommen, dass akustische Signale einzelner Geräte, insbesondere eines elektrischen Haushaltsgerätes, für eine Person nicht mehr oder nicht mehr vollständig wahrnehmbar sind. Eine Person kann als ein Mensch aufgefasst werden, der das elektrische Haushaltsgerät zumindest verwendet oder sich in dessen Nähe aufhält. Im Folgenden wird teilweise der Ausdruck Benutzer verwendet, welcher die gleiche Bedeutung haben kann.

Es ist eine Aufgabe der vorliegenden Erfindung, voranstehende, aus dem Stand der Technik bekannte Nachteile im Zusammenhang mit elektrischen Haushaltsgeräten zumindest teilweise zu beheben. Insbesondere ist es eine Aufgabe der vorliegenden Erfindung ein Verfahren zur Ausgabe eines akustischen Signals, ein elektrisches Haushaltsgerät sowie ein Computerprogrammprodukt bereitzustellen, bei dem auf einfache und kostengünstige Art die Wahrnehmbarkeit des akustischen Signals sicher gewährleistet und das Benutzererlebnis verbessert ist. Insbesondere soll auch die Sicherheit beim Betrieb eines elektrischen Haushaltsgerätes dadurch verbessert werden.

Die voranstehende Aufgabe wird gelöst durch ein Verfahren mit den Merkmalen des unabhängigen Verfahrensanspruchs, ein elektrisches Haushaltsgerät mit den Merkmalen des unabhängigen Vorrichtungsanspruchs, ein System mit den Merkmalen des unabhängigen Systemanspruchs, sowie ein Computerprogrammprodukt mit den Merkmalen des entsprechenden unabhängigen Anspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen elektrischen Haushaltsgerät, dem erfindungsgemäßen System und/oder dem erfindungsgemäßen Computerprogrammprodukt und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Verfahren zur Ausgabe eines Audiosignals bei einem elektrischen Haushaltsgerät vorgesehen, umfassend:
- Bestimmung einer Umgebungslautstärke,
- Berechnen einer Ausgabelautstärke, wobei die Umgebungslautstärke die Ausgabelautstärke zumindest teilweise bestimmt, insbesondere durch eine Recheneinheit des elektrischen Haushaltsgerätes,
- Ausgeben des Audiosignals mit der Ausgabelautstärke, insbesondere durch einen Lautsprecher der Küchenmacheine und/oder einen externen Lautsprecher.

Mit anderen Worten kann eine Methode zur Erzeugung eines akustischen Signals an einem elektrischen Haushaltsgerät vorgesehen sein, bei der die Lautstärke in der Umgebung der elektrischen Haushaltsgerätes erfasst und eine Lautstärke für das akustische Signal berechnet wird, wobei diese Lautstärke für das akustische Signal von der Lautstärke in der Umgebung abhängt. Ebenfalls umfasst die Methode das Ausgeben des akustischen Signals mit der berechneten Lautstärke für das akustische Signal. Gerade bei akustischen Warnhinweisen kann somit die Sicherheit beim Betrieb des elektrischen Haushaltsgerätes verbessert werden.

Bei dem Verfahren kann es sich insbesondere um ein computerimplementiertes Verfahren handeln.

Die Verfahrensschritte können zumindest teilweise gleichzeitig und/oder zeitlich nacheinander ablaufen, wobei die Reihenfolge der Verfahrensschritte nicht durch die angegebene Reihenfolge begrenzt ist, sodass einzelne Schritte in unterschiedlicher Reihenfolge durchführbar sind. Ferner können einzelne oder sämtliche Schritte (zeitlich und/oder kontinuierlich) wiederholt durchgeführt werden. Dies gilt auch für nachfolgend beschriebene, weitere Schritte des Verfahrens.

Im Rahmen der Erfindung können unter einer Ausgabe eines Audiosignals diejenigen Maßnahmen verstanden werden, welche dazu geeignet sind, einen für einen Menschen wahrnehmbaren, durch Schall erzeugten Reiz, beispielsweise durch einen oder mehrere Lautsprecher, zu generieren, wobei insbesondere der Schall einer vorbestimmten Information entspricht.

Ein Audiosignal kann allgemein als Information aufgefasst werden, welche in Schall umwandelbar ist. Mit anderen Worten kann basierend auf dem Audiosignal mit einer geeigneten Ausgabevorrichtung, vorzugsweise als zumindest ein Lautsprecher, ein akustisches Signal erzeugt werden. Es kann vorgesehen sein, dass das Audiosignal elektrisch ausgeführt, insbesondere als pulsierender Gleichstrom ausgeführt ist. Es kann ferner vorgesehen sein, dass das Audiosignal Informationen im Hörbereich des Menschen (ca. 10 bis 20.000 Hertz) umfasst. Das Audiosignal kann ferner (zunächst) digital, insbesondere codiert ausgeführt sein.

Ein elektrisches Haushaltsgerät kann eine Vorrichtung sein, welche zur Verrichtung von Tätigkeiten im Haushalt eingesetzt werden kann. Ferner kann ein elektrisches Haushaltsgerät als Vorrichtung aufgefasst werden, welche dazu geeignet ist, ein Geräusch zu erzeugen. Das elektrische Haushaltsgerät kann zumindest als Mikrowelle, Backofen, Heißluftfritteuse, Staubsauger, Robotersauger oder als Küchenmaschine ausgebildet sein.

Es kann sich bei dem elektrischen Haushaltsgerät um eine Vorrichtung handeln, die dazu geeignet ist, Lebensmittel zu verarbeiten. Das elektrische Haushaltsgerät kann dazu ausgeführt sein, Lebensmittel zumindest zu zerkleinern, erwärmen, formen, mischen, mixen, kneten, trennen, schneiden, wiegen, deren Volumen zu messen und/oder deren Art zu bestimmen.

Es kann vorgesehen sein, dass das elektrische Haushaltsgerät als ein dediziertes Gerät ausgeführt ist. Mit anderen Worten kann vorgesehen sein, dass das elektrische Haushaltsgerät lediglich eine Funktion ausführt. Ebenfalls kann vorgesehen sein, dass das elektrische Haushaltsgerät dazu ausgeführt ist, mindestens zwei, insbesondere drei oder mehrere Funktionen ausführen zu können. Es kann vorgesehen sein, dass das elektrische Haushaltsgerät dazu ausgeführt ist, zumindest eine Heiz-, Mix-, Waage-, Dampfgar-, Brat- und/oder Frittierfunktion bereitzustellen. Ferner kann vorgesehen sein, dass das elektrische Haushaltsgerät eine Basis, insbesondere mit einem Motor, aufweist, auf der ein, insbesondere beheizbares, (abnehmbares) Mixgefäß anordnenbar ist. Die Heizung des Mixgefäßes kann zumindest als integrierte Heizung ausgeführt sein oder extern, insbesondere induktiv, erfolgen. Das Mixgefäß kann insbesondere eine Öffnung aufweisen, durch die eine Bearbeitungsvorrichtung, die mit dem Motor verbindbar ist, hindurchführbar ist, sodass die Bearbeitungsvorrichtung in das Mixgefäß einbringbares Lebensmittel bearbeiten kann.

Das elektrische Haushaltsgerät kann ferner zumindest einen Lautsprecher (als geeignete Ausgabevorrichtung) aufweisen, der dazu ausgeführt ist, das Audiosignal mit der Ausgabelautstärke auszugeben.

Ferner kann das elektrische Haushaltsgerät eine Recheneinheit aufweisen, welche zumindest dazu ausgeführt ist, die Ausgabelautstärke zu berechnen. Ferner ist es denkbar, dass die Recheneinheit auch weitere Funktionen, wie zuvor bereits erwähnt, des elektrischen Haushaltsgerätes kontrolliert und steuert.

Unter einer Bestimmung der Umgebungslautstärke können Maßnahmen aufgefasst werden, welche geeignet sind, Informationen über die Lautstärke in der Umgebung des elektrischen Haushaltsgerätes zu sammeln. Die Bestimmung kann auf unterschiedliche Arten erfolgen, welche nachfolgend noch näher beschrieben werden. Die Bestimmung kann zumindest als Messung oder Abfrage ausgeführt sein. Bei einer Messung kann ein Sensor benutzt werden, welcher insbesondere (direkt) an (oder in) dem elektrischen Haushaltsgerät und/oder an (oder in) einem externen Gerät angeordnet sein kann. Bei einer Abfrage können Informationen zumindest von dem elektrischen Haushaltsgerät oder anderen Vorrichtungen abgerufen werden. Beispielsweise kann die aktuelle Lautstärke von einem Fernseher abgerufen werden.

Es kann vorgesehen sein, dass zumindest die Umgebungslautstärke oder Ausgabelautstärke zumindest als Lautstärkepegel, Lautheit, oder Schalldruckpegel bestimmt und/oder berechnet werden. Gleiches gilt für alle weiteren Lautstärken im Zusammenhang mit der Lehre der Erfindung.

Der Lautstärkepegel ist ein psychoakustisches Vergleichsmaß: Es beschreibt, welchen Schalldruckpegel ein Sinuston mit einer Frequenz von 1.000 Hz haben müsste, damit dieser Ton genauso laut empfunden wird, wie das beurteilte Hörereignis. Bei einer Schall-Frequenz von 1.000 Hz stimmen Schalldruckpegel, gemessen in Dezibel, und Lautstärkepegel, gemessen in Phon, überein.

Die Lautheit in Sone macht eine direkte Aussage darüber, wie laut ein Mensch den Schall empfindet. Die Lautheit in Sone ist eine psychoakustische Größe, die auf den Isophonen des Lautstärkepegels aufbaut. Ein Schall mit dem Lautstärkepegel von 40 phon erhält die Lautheit 1 sone.

Der Schalldruckpegel (englisch: Sound Pressure Level (SPL)) kann als der dekadische Logarithmus des quadratischen Verhältnisses zwischen dem Effektivwert des gemessenen Schalldrucks und seinem in der Akustik gebräuchlichen Bezugswert von 20 pPa aufgefasst werden. Der Schalldruckpegel kann als ein Maß für die Schallleistung, die dem Quadrat des Schalldruckes proportional ist, verstanden werden.

Die Umgebungslautstärke kann als diejenige Lautstärke aufgefasst werden, welche in der Nähe, beispielsweise im Umkreis von ca. 3 bis 4 m, des elektrischen Haushaltsgerätes vorliegt. Eine Umgebungslautstärke kann sich zumindest auf Geräusche beziehen, die ausschließlich von der Umgebung des elektrischen Haushaltsgerätes erzeugt werden oder um Geräusche, die durch das elektrische Haushaltsgerät erzeugt werden. Die Umgebungslautstärke kann zumindest ein einzelner Wert, beispielsweise in Dezibel, oder als mehrere Werte aufgefasst werden. Mehrere Werte können ferner, insbesondere über einen bestimmten und/oder einstellbaren, Zeitraum gemittelt werden. Es kann vorgesehen sein, dass die Umgebungslautstärke frequenzspezifisch ist. Mit anderen Worten kann für eine oder mehrere Frequenzen eine Umgebungslautstärke bestimmt werden.

Die Umgebungslautstärke kann ein einzelner Wert sein. Es kann ebenfalls vorgesehen sein, dass die Umgebungslautstärke gebildet wird aus mehreren Messungen, die in einem vorbestimmten Zeitfenster erfasst werden. Die Umgebungslautstärke kann insbesondere ein Mittelwert diese Messungen sein.

Es kann vorgesehen sein, dass die Umgebungslautstärke für die Frequenzen bestimmt wird, welche zumindest teilweise vom Audiosignal umfasst sind. Hierdurch wird der Vorteil erreicht, dass das die Lautstärke des Audiosignals nicht mehr als unbedingt notwendig anpassbar ist. Wenn beispielsweise eine hohe Umgebungslautstärke in einem sehr niederfrequenten Bereich (z. B. 20 Hz) gemessen wird (Beispielsweise durch ein vorbeifahrendes Fahrzeug), das Audiosignal aber zwischen 400 und 4.000 Hz liegt, ist möglicherweise nicht notwendig, die Ausgabelautstärke anzuheben.

Mit Berechnen einer Ausgabelautstärke können solche Maßnahmen gemeint sein, welche dazu geeignet sind, aus der Information über die Umgebungslautstärke eine Ausgabelautstärke abzuleiten. Dabei kann die Berechnung anhand von zumindest einer mathematischen Funktion, eines Algorithmus und/oder einer Datenbankabfrage erfolgen. Unter dem Begriff: Berechnung oder Berechnen kann im weitesten Sinne jegliche Bestimmung der Ausgabelautstärke anhand von Eingangsgrößen, wie beispielsweise der Umgebungslautstärke, verstanden werden. Beispielsweise kann die Ausgabelautstärke so berechnet werden, dass der Pegel der Ausgabelautstärke zumindest höher ist als der Pegel der Umgebungslautstärke.

Die Berechnung kann an dem elektrischen Haushaltsgerät, insbesondere an einer Recheneinheit des elektrischen Haushaltsgerätes, erfolgen. Alternativ oder in Ergänzung kann die Berechnung auch extern, insbesondere über einen Cloud-Dienst und/oder einem externen Gerät mit dem Sensor für die Umgebungslautstärke, erfolgen. Das Berechnen an dem elektrischen Haushaltsgerät bietet den Vorteil, dass die Informationen direkt vorliegen und keine Verzögerungen in der Signalübertragung auftreten können. Bei einer externen Berechnung kann der Vorteil erreicht werden, dass je nach Bedarf auch auf eine sehr hohe Rechenleistung zurückgegriffen werden kann, welche für die gewöhnlichen Aufgaben, die der Recheneinheit eines elektrischen Haushaltsgerätes bearbeitet werden, ungewöhnlich hoch wäre.

Unter dem zumindest teilweisen Bestimmen der Ausgabelautstärke durch die Umgebungslautstärke kann verstanden werden, dass die Umgebungslautstärke zumindest ein Faktor bei der Berechnung der Ausgabelautstärke ist. Die Umgebungslautstärke kann der einzige Faktor sein oder noch weitere hinzutreten.

Das Ausgeben des Audiosignals kann als Wiedergabe der Information des Audiosignals in Form von Schallwellen aufgefasst werden. Mit anderen Worten kann das ausgegebene Audiosignal bei einer Person einen akustischen Reiz erzeugen.

Insgesamt wird durch das Verfahren der Vorteil erreicht, dass auf einfache und kostengünstige Art die Wahrnehmbarkeit des akustischen Signals sicher gewährleistet und das Benutzererlebnis sowie die Sicherheit verbessert ist. Durch die Bestimmung der Umgebungslautstärke kann zunächst auf einfache Art und Weise ein Ausgangswert ermittelt werden, in welchem Bereich die Ausgabelautstärke liegen sollte. Durch die Berechnung der Ausgabelautstärke unter Berücksichtigung der Umgebungslautstärke kann sichergestellt werden, dass eine Person das Audiosignal auch hören kann. Dies wird dann durch die Ausgabe mit der Ausgabelautstärke sichergestellt. Dadurch, dass die Ausgabelautstärke an die Umgebungslautstärke angepasst wiedergegeben wird, kann die Person das Audiosignal gut hören und verstehen, sodass sich das Benutzererlebnis verbessert.

Im Rahmen der Erfindung ist es weiterhin denkbar, dass die Bestimmung der Umgebungslautstärke zumindest über einen Sensor oder aus einer von dem elektrischen Haushaltsgerät durchzuführenden Tätigkeit, insbesondere zumindest einem zuzubereitenden Rezept oder eines Saugprogramms, erfolgt.

Mit anderen Worten kann vorgesehen sein, dass die Umgebungslautstärke (direkt) durch ein Messgerät, insbesondere mit zumindest einem Mikrofon, erfasst wird oder basierend auf Informationen bestimmt wird, welche insbesondere in einem Rezept oder einem Ablaufplan für einen Saugvorgang enthalten sind, welches mit Hilfe des elektrischen Haushaltsgerätes zubereitet werden soll.

Die Bestimmung über den Sensor bietet den Vorteil, dass eine tatsächliche (vorhandene) Umgebungslautstärke (in der Nähe der Küchenmaschine) bestimmt werden kann. So kann auch bei ungewöhnlichen oder unerwarteten Umgebungslautstärken passend die Ausgabelautstärke angepasst werden.

Die Bestimmung über ein von dem elektrischen Haushaltsgerät durchzuführenden Tätigkeit bietet den Vorteil, dass gerade kein weiteres Bauteil (wie ein Sensor) an dem elektrischen Haushaltsgerät vorgesehen sein muss, sodass der Aufbau des elektrischen Haushaltsgerätes vereinfacht und das Verfahren leichter anwendbar ist. Zudem bietet die Bestimmung über das Rezept den Vorteil, dass bereits bevor das eigentliche Geräusch entsteht eine Information darüber bereitsteht, welche Umgebungslautstärke zu erwarten ist. Wenn beispielsweise das Rezept einen Mixvorgang bei voller Leistung vorsieht, kann entsprechend die Ausgabelautstärke angepasst werden, bevor ein Sensor die Erhöhung der Lautstärke messen könnte. So kann eine Verzögerung zwischen einer sich ändernden Lautstärke und der Anpassung der Ausgabelautstärke verhindert werden, wodurch sich das Benutzererlebnis verbessert. Im Sinne der Erfindung kann unter dem Begriff: Rezept auch zumindest nur der nächste einzustellende Bearbeitungsschritt, der eine Funktion des elektrischen Haushaltsgerätes umfasst (wie beispielsweise Mixen, Rühren, Erhitzen, Wiegen und dergleichen), verstanden werden.

Vorzugsweise kann bei einem erfindungsgemäßen Verfahren vorgesehen sein, dass der Sensor zumindest ausgeführt ist als
- ein Mikrofon,
- eine Waage,
- ein Gyroskop,
- eine Kamera,
- ein Vibrationssensor,
- eine Datenschnittstelle, über die eine Zustandsinformation eines externen Geräts empfangbar ist,
- eine Benutzerschnittstelle, die dazu ausgeführt ist, Eingaben des Benutzers zu erfassen.

Mit anderen Worten kann der Sensor zumindest als ein Schallwandler, wie beispielsweise Mikrofon, ausgeführt sein, der Luftschall als Schallwechseldruckschwingungen vorzugsweise in entsprechende elektrische Spannungsänderungen als Mikrofonsignal umwandelt.

Durch die direkte Messung der Umgebungslautstärke durch ein Mikrofon lässt sich die aktuelle Umgebungslautstärke sicher und unmittelbar erfassen. Insbesondere können auch nicht vorhersehbare Umgebungsgeräusche, wie etwa eine Unterhaltung durch Personen, berücksichtigt werden.

Es kann vorgesehen sein, dass zumindest ein weiteres Mikrofon vorgesehen ist, wobei insbesondere das zumindest eine weitere Mikrofon an einer anderen Position als das Mikrofon vorgesehen sein kann. Ferner können auch drei oder noch weitere Mikrofone vorgesehen sein. Durch die unterschiedlichen Positionen der Mikrofone können örtliche Schwankungen in der Umgebungslautstärke berücksichtigt und beispielsweise durch eine Mittelung der gemessenen Werte ausgeglichen werden. Die Umgebungslautstärke kann gebildet werden durch einen berechneten Wert, insbesondere einen Mittelwert, der gemessenen Werte der Mikrofone. Es kann vorgesehen sein, dass für den berechneten Wert eine Gewichtung, welche abhängig ist von der Entfernung zum elektrischen Haushaltsgerät, vorgenommen wird. Hierdurch wird der Vorteil erreicht, dass näher am elektrischen Haushaltsgerät und/oder an der Person befindlichen Mikrofone eine höhere Relevanz haben und dementsprechend stärker gewichtet werden können, sodass das die Ausgabelautstärke des Audiosignals genauer einstellbar ist.

Das Mikrofon kann (als Sensor) zumindest an einer Basis des elektrischen Haushaltsgerätes, einem externen Gerät oder einem weiteren elektrischen Haushaltsgerät vorgesehen sein. Die Anordnung am elektrischen Haushaltsgerät bietet den Vorteil, dass wenn eine Person das elektrische Haushaltsgerät benutzt und sich in deren Nähe befindet, eine optimal angepasste Ausgabelautstärke bereitgestellt bekommt.

Insbesondere falls sich die Person nicht direkt am elektrischen Haushaltsgerät befindet oder z. B. ein externes Gerät zur Wiedergabe des Audiosignals verwendet wird, kann es vorteilhaft sein, wenn auch die Umgebungslautstärke an dieser Stelle gemessen wird, um eine auf an diesem Ort angepasste Ausgabelautstärke bereitzustellen.

Die übrigen genannten Sensoren (Waage, Gyroskop, Kamera, Vibrationssensor, Datenschnittstelle) erlauben zwar keine direkte Messung des Schallpegels, können aber dennoch für eine Bestimmung der Umgebungslautstärke herangezogen werden. Der Fachmann kann hier entsprechende Messverfahren für das jeweilige spezielle elektrische Haushaltsgerät vorsehen. Beispielhaft kann bei einer Küchenmaschine über eine Waage die Menge eines Lebensmittels ermittelt werden. Bei einigen Küchenmaschinen, etwa einem Wasserkocher oder einem Mixer, beeinflusst nämlich die Menge der Lebensmittel die Lautstärke der Küchenmaschine während der Benutzung. Die Menge der Lebensmittel kann aber auch über die Kamera oder die Datenschnittstelle erfasst werden. Ein Gyroskop kann beispielsweise bestimmen, wie stark eine Küchenmaschine sich bewegt, insbesondere vibriert, was spezifisch für die von der Küchenmaschine abgegebene Lautstärke ist.

Insbesondere wenn die genannten Sensoren noch eine weitere Funktion im Zusammenhang mit der Zubereitung von Lebensmitteln haben, ergibt sich der Effekt, dass das Verfahren ausgeführt werden kann, ohne dass zusätzliche Sensoren verbaut werden müssen. Wenn beispielsweise an der Küchenmaschine ohnehin eine Waage zum Wiegen der Lebensmittel vorgesehen ist, kann diese Information entsprechend auch in die Berechnung der Ausgabelautstärke einfließen.

Im Rahmen der Erfindung ist es weiterhin denkbar, dass die von dem elektrischen Haushaltsgerät durchzuführende Tätigkeit zumindest
- eine Zutat,
- eine Zubereitungsart,
- eine Saugleistung, insbesondere eine Saugstufe,
- eine Bürstendrehzahl, oder
- ein Bearbeitungswerkzeug umfasst,
und diese(s) die Ausgabelautstärke zumindest teilweise bestimmt.

Mit anderen Worten kann das Rezept eine oder mehrere Informationen umfassen, welche zumindest indirekt mit einer zu erwartenden Umgebungslautstärke kausal verknüpft sind.

Die Zutaten, insbesondere für das zuzubereitende Rezept, können sich auf die Umgebungslautstärke auswirken. Wenn beispielsweise Eiswürfel zu zerstoßenem Eis verarbeitet werden, ist eine höhere Umgebungslautstärke zu erwarten als wenn gekochte Kartoffeln püriert werden. Ferner kann auch die Zubereitungsart einen Einfluss auf die Umgebungslautstärke haben. So ist ein Bratvorgang in der Regel mit einer höheren Umgebungslautstärke verbunden als Dünsten. Auch das Bearbeitungswerkzeug kann einen Einfluss haben. Wenn das Bearbeitungswerkzeug als Schneidmesser ausgestattet ist, sind ebenfalls andere Umgebungslautstärken zu erwarten als bei einem als Knethaken ausgeführten Bearbeitungswerkzeug. Eine ähnliche Überlegung gilt für die Saugleistung, insbesondere für die Saugstufe, und/oder die Bürstendrehzahl. Eine Saugstufe kann als eine bestimmte Saugleistung aufgefasst werden, welche insbesondere durch eine Motordrehzahl bestimmt sein kann. Eine Bürstendrehzahl kann die Drehzahl einer Bürste sein, welche dazu ausgeführt ist, rotatorisch einen Untergrund zu überstreichen und Schmutz einer Schmutzaufnahmeöffnung eines Reinigungsgerätes, insbesondere eines Staubsaugers, welcher als Robotersauger ausgeführt sein kann, zuzuführen. Wenn beispielsweise beim Überfahren eines Teppichs die Saugleistung und/oder die Bürstendrehzahl erhöht wird, kann auch das Ausgangssignal entsprechend angepasst werden.

Durch die Informationen im Rezept kann die Umgebungslautstärke auf einfache und kostengünstige Art und Weise zumindest teilweise Bestimmung und berechnet werden.

Weiterhin kann bei einem erfindungsgemäßen Verfahren vorteilhafterweise vorgesehen sein, dass die Ausgabelautstärke zumindest abhängig oder proportional zur Umgebungslautstärke angepasst wird. Anders ausgedrückt kann die Ausgabelautstärke umso lauter sein, je höher die Umgebungslautstärke ist. Das bietet den Vorteil, dass stets eine an die Umgebungslautstärke angepasste Ausgabelautstärke ausgegeben wird.

Die Anpassung kann auch überproportional oder unterproportional erfolgen. Es kann vorgesehen sein, dass die Anpassung spezifisch für das Frequenzspektrum der Umgebungslautstärke und/oder des Audiosignals angepasst wird. Dadurch kann ggf. eine geringfügigere Erhöhung der Lautstärke erfolgen, falls sich das Frequenzspektrum nicht zu stark überschneidet.

Ferner kann bei einem erfindungsgemäßen Verfahren vorteilhafterweise vorgesehen sein, dass die Ausgabelautstärke zur Umgebungslautstärke mit zumindest einem Faktor angepasst wird, wobei insbesondere der Faktor durch einen Benutzer, insbesondere über eine Benutzerschnittstelle, wählbar ist.

Mit anderen Worten kann durch einen Wert angegeben werden, wie stark die Ausgabelautstärke an die Umgebungslautstärke angepasst werden soll. Es kann vorgesehen sein, dass eine Person diesen Wert über eine Eingabe übermitteln kann. Der Faktor kann zumindest einen linearen oder einen nicht-linearen Einfluss auf die Anpassung haben.

Auf diese Weise kann je nach Situation die Anpassung der Ausgabelautstärke an die Umgebungslautstärke in ihrer Stärke auf die vorherrschenden Bedingungen zugeschnitten werden, wodurch sich das Benutzererlebnis verbessert. Insbesondere kann somit die Anpassung der Ausgabelautstärke nach den Vorlieben des Benutzers erfolgen.

Es ist ferner bei einem erfindungsgemäßen Verfahren denkbar, dass eine maximale Ausgabelautstärke vorgesehen ist, welche beim Ausgeben des Audiosignals nicht überschritten wird.

Anders ausgedrückt kann eine höchste Ausgabelautstärke vorgesehen sein, welche im Rahmen der Anpassung nicht überschritten wird.

Dies bietet den Vorteil, dass zum einen das oder die Mittel zur Ausgabe des Audiosignals, insbesondere ein oder mehrere Lautsprecher, nicht überlastet werden. Darüber hinaus wird auch eine Schädigung des Gehörs von in der Nähe befindlichen Personen nicht gefährdet. Ebenfalls kann sichergestellt werden, dass die Mittel zur Ausgabe des Audiosignals nur in einem Bereich betrieben werden, in denen noch ein ansprechendes Klangergebnis erzeugbar ist. Hierdurch wird der Benutzerkomfort erhöht.

Ebenfalls kann bei einem erfindungsgemäßen Verfahren vorteilhafterweise vorgesehen sein, dass die Ausgabelautstärke ferner abhängig ist von einer Kategorie des Audiosignals, wobei insbesondere die Kategorie zumindest eine Warnung, einen Hinweis, eine Bestätigung, eine Sprachausgabe oder eine Musik umfasst.

Mit anderen Worten kann vorgesehen sein, dass für unterschiedliche Arten von Audiosignalen auch eine unterschiedlich starke Anpassung der Ausgabelautstärke erfolgt.

Beispielsweise kann es sinnvoll sein, bei Warnungen die Ausgabelautstärke stärker zu erhöhen, um die Wahrnehmbarkeit besonders sicher zu gewährleisten. Bei der Wiedergabe von Musik wird der Hörgenuss möglicherweise sogar eher gestört, wenn eine zu starke Anpassung der Lautstärke erfolgt.

Ferner kann bei einem erfindungsgemäßen Verfahren vorteilhafterweise vorgesehen sein, dass das Ausgeben des Audiosignals mit der Ausgabelautstärke zu einem von dem elektrischen Haushaltsgerät externen Gerät erfolgt. Anders ausgedrückt kann auch vorgesehen sein, dass ein von dem elektrischen Haushaltsgerät entfernt anordenbares Gerät das Audiosignal mit der Ausgabelautstärke ausgibt.

Hierdurch wird der Vorteil erreicht, dass die Vorzüge des externen Geräts zur Ausgabe des Audiosignals genutzt werden können. Wenn es sich dabei beispielsweise um einen Bluetoothlautsprecher handelt, kann dieser einfach bewegt werden. So kann beispielsweise bei einem längeren, insbesondere automatischen, Zubereitungsvorgang der Lautsprecher mitgenommen werden und an einem von dem elektrischen Haushaltsgerät entfernten Ort das Audiosignal zur Bestätigung des Endes des Zubereitungsvorgangs in angepasster Lautstärke gehört werden.

Es kann ebenfalls vorgesehen sein, dass das Ausgeben des Audiosignals mit der Ausgabelautstärke, mit dem von dem elektrischen Haushaltsgerät externen Gerät, zusätzlich zu einer Ausgabe an dem elektrischen Haushaltsgerät selbst erfolgt.

Dadurch wird der Vorteil erreicht, dass jederzeit gewährleistet ist, dass eine sich an dem elektrischen Haushaltsgerät befindliche Person das Audiosignal hören kann.

Im Rahmen der Erfindung ist es weiterhin denkbar, dass das externe Gerät zumindest als ein Tablet, Computer, Smartphone, Smart Watch, Kopfhörer, Lautsprecher, oder Fernseher ausgeführt ist. Die genannten Gerätetypen sind oft in einer Vielzahl von Haushalten vorhanden. Durch die Nutzung dieser Geräte, die zudem den benutzenden Personen bekannt sind, wird das Benutzererlebnis weiter verbessert.

Es ist ferner bei einem erfindungsgemäßen Verfahren denkbar, dass die Ausgabelautstärke zumindest teilweise bestimmt wird durch zumindest:
- eine Drehzahl eines Motors des elektrischen Haushaltsgerätes,
- eine Drehrichtung des Motors,
- ein zu verarbeitendes Lebensmittel,
- eine Drehzahl eines Lüfters des elektrischen Haushaltsgerätes,
- einem, insbesondere tauschbaren, Bearbeitungswerkzeug des elektrischen Haushaltsgerätes,
- eine Saugleistung, insbesondere eine Saugstufe,
- eine Bürstendrehzahl,
- einem Umfeldgeräusch.

Anders ausgedrückt kann die Ausgabelautstärke durch Eigenschaften des elektrischen Haushaltsgerätes und des Umfelds beeinflusst werden. Durch die Einbeziehung solcher Größen kann die Ausgabelautstärke besonders genau an die Umgebungslautstärke angepasst werden, wodurch sich das Benutzererlebnis verbessert.

Bei der Nutzung von Werten, die durch das elektrische Haushaltsgerät gesteuert werden (Drehzahl des Motors und/oder des Lüfters, Drehrichtung des Motors) wird der besondere Vorteil erreicht, dass zur Steuerung in der Regel Istwerte bestimmt werden, sodass diese Werte nicht extra zur Anpassung der Ausgabelautstärke erhoben werden müssen.

Vorzugsweise kann bei einem erfindungsgemäßen Verfahren vorgesehen sein, dass das Audiosignal zumindest umfasst:
- einen Warnton,
- einen Hinweiston,
- eine akustische Bestätigung,
- eine Sprachausgabe nach einer manuellen Eingabe,
- eine Sprachausgabe als Reaktion auf eine Spracheingabe bei der Sprachsteuerung.

Diese Arten von Audiosignalen können als Kategorie des Audiosignals aufgefasst werden. Die genannten Audiosignale profitieren besonders von einer angepassten Ausgabelautstärke, da ihre Wahrnehmung durch den Benutzer eine hohe Relevanz für das sichere Gelingen der Zubereitung der Lebensmittel aufweist.

Gemäß einem weiteren Aspekt der Erfindung ist ein elektrisches Haushaltsgerät, insbesondere ausgeführt zur Ausführung eines Verfahrens nach einem der vorhergehenden Ansprüche, vorgesehen, umfassend eine Recheneinheit, die dazu ausgeführt ist,
- eine Umgebungslautstärke zu bestimmen,
- eine Ausgabelautstärke zu berechnen, wobei die Umgebungslautstärke die Ausgabelautstärke zumindest teilweise bestimmt, und
- das Audiosignal mit der Ausgabelautstärke auszugeben.

Somit bringt ein erfindungsgemäßes elektrisches Haushaltsgerät die gleichen Vorteile mit sich, wie sie bereits ausführlich mit Bezug auf ein erfindungsgemäßes Verfahren beschrieben worden sind.

Das entsprechende elektrische Haushaltsgerät kann zumindest einen (abnehmbaren) Behälter (oder auch Mixgefäß genannt) für die Zubereitung der Speisen, ein Rührwerk, welches in den Behälter hineinragt, und die (zentrale) Recheneinheit mit zumindest einer Benutzereingabegerät und ggf. einer (Daten-)Schnittstelle aufweisen, um bereits einige Gerätefunktionen selbst ausführen zu können. Ferner kann das elektrische Haushaltsgerät als Küchenmaschine ausgeführt sein. Insbesondere kann das elektrische Haushaltsgerät über eine Heizung (im Behälter) verfügen, um den Behälter bzw. den Inhalt im Behälter erwärmen zu können. Des Weiteren kann das elektrische Haushaltsgerät eine Waage aufweisen, um somit das Gewicht der zu zuführenden Lebensmittel für die Speisezubereitung einfach ermitteln zu können. Anhand des Gewichts kann auch eine Anpassung des Rezepts automatisch durch die Recheneinheit durch entsprechende Methoden und Algorithmen vorgenommen werden (bspw. Speise wird für 3 anstatt von 2 Personen zubereitet).

Gemäß einem weiteren Aspekt der Erfindung ist ein System zur Ausgabe eines Audiosignals, vorgesehen, umfassend:
eine Küchenmaschine, insbesondere ausgeführt zur Ausführung eines Verfahrens nach einem der vorhergehenden Ansprüche, umfassend eine Recheneinheit, die dazu ausgeführt ist,
   - eine Umgebungslautstärke zu bestimmen,
   - eine Ausgabelautstärke zu berechnen, wobei die Umgebungslautstärke die Ausgabelautstärke zumindest teilweise bestimmt, und
   - das Audiosignal mit der Ausgabelautstärke auszugeben,
sowie ein von dem elektrischen Haushaltsgerät externes Gerät, dass zum Ausgeben des Audiosignals mit der Ausgabelautstärke ausgeführt ist.

Somit bringt ein erfindungsgemäßes System die gleichen Vorteile mit sich, wie sie bereits ausführlich mit Bezug auf ein erfindungsgemäßes Verfahren und/oder ein erfindungsgemäßes elektrisches Haushaltsgerät beschrieben worden sind.

Gemäß einem weiteren Aspekt der Erfindung ist ein Computerprogrammprodukt, vorgesehen, umfassend Befehle, die bei der Ausführung des Programms durch einen Computer, insbesondere durch eine Recheneinheit zumindest eines erfindungsgemäßen elektrischen Haushaltsgerätes oder eines erfindungsgemäßen Systems, dieses veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren, ein erfindungsgemäßes elektrisches Haushaltsgerät und/oder ein erfindungsgemäßes System beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1:: eine Darstellung eines Verfahrens gemäß der Erfindung,
- Fig. 2:: ein elektrisches Haushaltsgerät und ein System gemäß der Erfindung,
- Fig. 3:: ein weiteres elektrisches Haushaltsgerät und ein System gemäß der Erfindung, und
- Fig. 4:: Verlauf einer Umgebungslautstärke und einer Ausgabelautstärke als Funktion der Zeit,
- Fig. 5:: weiterer Verlauf einer Umgebungslautstärke und einer Ausgabelautstärke als Funktion der Zeit, und
- Fig. 6:: ein Verlauf einer Umgebungslautstärke und mehrerer Ausgabelautstärken als Funktion der Zeit.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

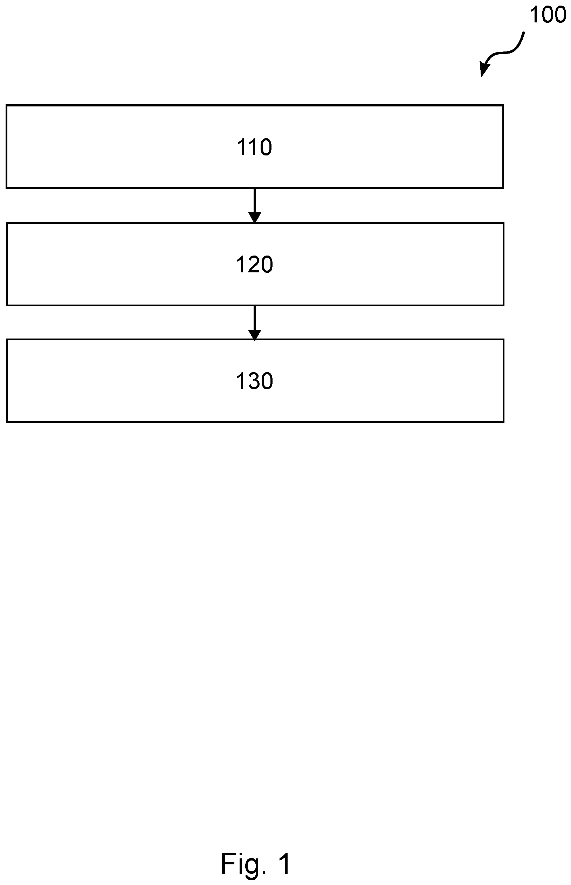

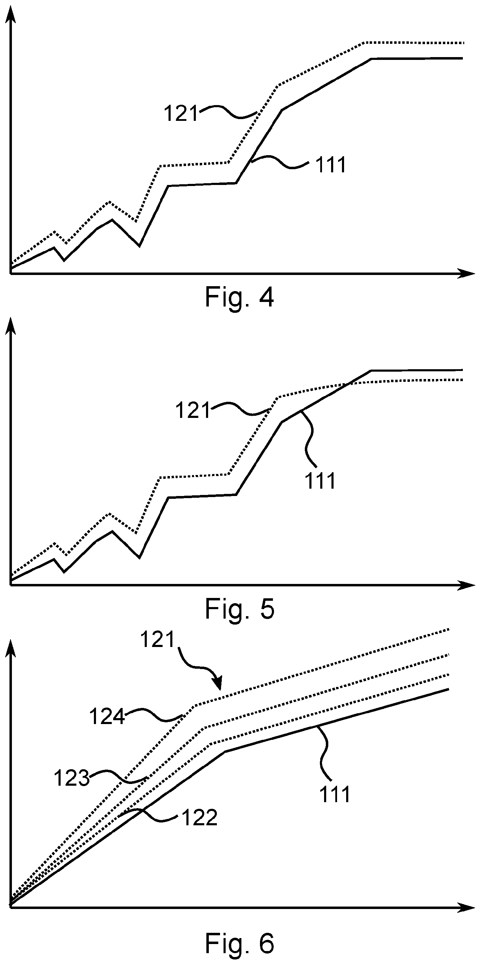

Figur 1 zeigt ein Verfahren 100 zur Ausgabe eines Audiosignals 20 bei einem elektrischen Haushaltsgerät 200, umfassend:
- Bestimmung 110 einer Umgebungslautstärke 111 (Figur 4-6),
- Berechnen 120 einer Ausgabelautstärke 121 (Figur 4-6), wobei die Umgebungslautstärke 111 die Ausgabelautstärke 121 zumindest teilweise bestimmt,
- Ausgeben 130 des Audiosignals 20 mit der Ausgabelautstärke 121.

Die Verfahrensschritte des Verfahrens 100 können zumindest teilweise gleichzeitig und/oder zeitlich nacheinander ablaufen, wobei die Reihenfolge der Verfahrensschritte nicht durch die angegebene Reihenfolge begrenzt ist, sodass einzelne Schritte in unterschiedlicher Reihenfolge durchführbar sind. Ferner können einzelne oder sämtliche Schritte wiederholt durchgeführt werden. Dies gilt auch für nachfolgend beschriebene, weitere Schritte des Verfahrens 100.

Insgesamt wird durch das Verfahren 100 der Vorteil erreicht, dass auf einfache und kostengünstige Art die Wahrnehmbarkeit des akustischen Signals sicher gewährleistet und das Benutzererlebnis verbessert ist. Durch die Bestimmung 110 der Umgebungslautstärke 111 kann zunächst auf einfache Art und Weise ein Ausgangswert ermittelt werden, in welchem Bereich die Ausgabelautstärke 121 liegen sollte. Durch die Berechnung der Ausgabelautstärke 121 unter Berücksichtigung der Umgebungslautstärke 111 kann sichergestellt werden, dass eine Person das Audiosignal 20 auch hören kann. Dies wird dann durch die Ausgabe mit der Ausgabelautstärke 121 sichergestellt. Dadurch, dass die Ausgabelautstärke 121 an die Umgebungslautstärke 111 angepasst wiedergegeben wird, kann die Person das Audiosignal 20 gut hören und verstehen, sodass sich das Benutzererlebnis verbessert.

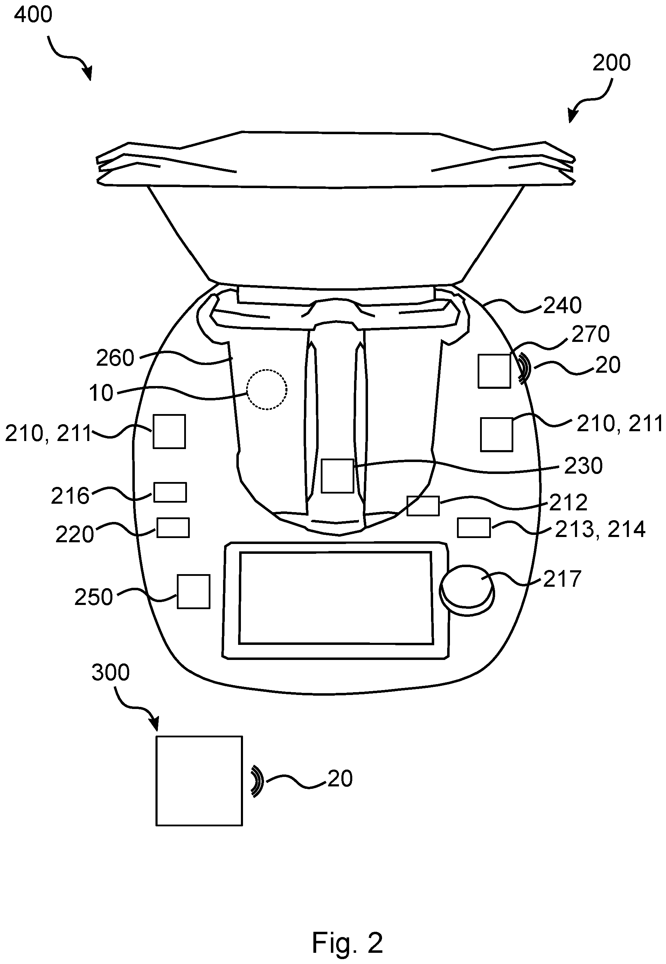

Im Zusammenhang mit der Figur 2 werden weitere Aspekte des Verfahrens 100, ein erfindungsgemäßes elektrisches Haushaltsgerät 200 sowie ein System 400 erläutert.

Dargestellt ist ein elektrisches Haushaltsgerät 200. Dieses kann ausgeführt sein zur Ausführung eines erfindungsgemäßen Verfahrens 100. Das elektrische Haushaltsgerät 200 umfasst eine Recheneinheit 220, die dazu ausgeführt ist,
- eine Umgebungslautstärke 111 (Figur 4-6) zu bestimmen,
- eine Ausgabelautstärke 121 (Figur 4-6) zu berechnen 120, wobei die Umgebungslautstärke 111 die Ausgabelautstärke 121 zumindest teilweise bestimmt, und
- das Audiosignal 20 mit der Ausgabelautstärke 121 auszugeben.

Ein elektrisches Haushaltsgerät 200 kann eine Vorrichtung sein, welche zur Verrichtung von Tätigkeiten im Haushalt eingesetzt werden kann. Das elektrische Haushaltsgerät kann zumindest als Mikrowelle, Backofen, Heißluftfritteuse, Staubsauger, Robotersauger oder als Küchenmaschine ausgebildet sein.

Es kann sich bei dem elektrischen Haushaltsgerät 200 um eine Vorrichtung handeln, die dazu geeignet ist, Lebensmittel 10 zu verarbeiten. Das elektrische Haushaltsgerät 200 kann dazu ausgeführt sein, Lebensmittel 10 zumindest zu zerkleinern, erwärmen, formen, mischen, mixen, kneten, trennen, schneiden, wiegen, deren Volumen zu messen oder deren Art bestimmen.

Es kann vorgesehen sein, dass das elektrische Haushaltsgerät 200 als ein dediziertes Gerät ausgeführt ist. Mit anderen Worten kann vorgesehen sein, dass das elektrische Haushaltsgerät 200 lediglich eine Funktion ausführt. Ebenfalls kann vorgesehen sein, dass das elektrische Haushaltsgerät 200 dazu ausgeführt ist, mindestens zwei, insbesondere drei Funktionen ausführen zu können. Es kann vorgesehen sein, dass das elektrische Haushaltsgerät 200 dazu ausgeführt ist zumindest eine Heiz-, Mix-, Waage-, Dampfgar-, Brat- oder Frittierfunktion bereitzustellen.

Ferner kann vorgesehen sein, dass das elektrische Haushaltsgerät 200 wie dargestellt eine Basis 240, insbesondere mit einem Motor 250, aufweist, auf der ein, insbesondere beheizbares, Mixgefäß 260 anordbar ist. Die Heizung des Mixgefäßes 260 kann zumindest als integrierte Heizung ausgeführt sein oder extern, insbesondere induktiv, erfolgen. Das Mixgefäß 260 kann insbesondere eine Öffnung aufweisen, durch die ein Bearbeitungswerkzeug 230, das mit dem Motor 250 verbindbar ist, hindurchführbar ist, sodass das Bearbeitungswerkzeug 230 in das Mixgefäß 260 einbringbares Lebensmittel 10 bearbeiten kann.

Das elektrische Haushaltsgerät 200 kann ferner zumindest einen Lautsprecher 270 aufweisen, der dazu ausgeführt ist, das Audiosignal 20 mit der Ausgabelautstärke 121 auszugeben.

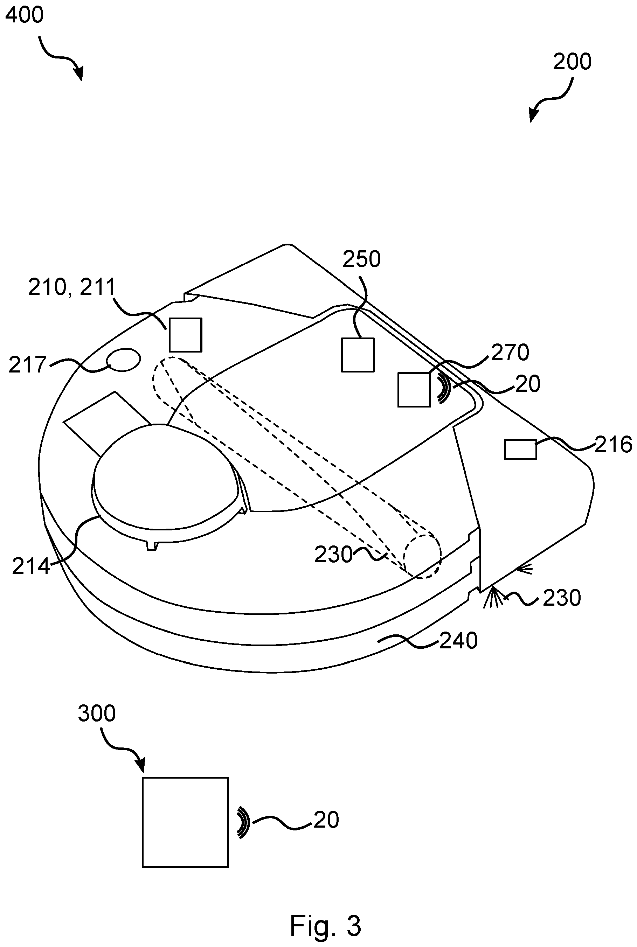

Das dargestellte elektrische Haushaltsgerät 200 ist beispielhaft gezeigt. Ein elektrisches Haushaltsgerät 200 kann eine Vorrichtung sein, welche zur Verrichtung von Tätigkeiten im Haushalt eingesetzt werden kann. Ferner kann ein elektrisches Haushaltsgerät als Vorrichtung aufgefasst werden, welche dazu geeignet ist, ein Geräusch zu erzeugen. Das elektrische Haushaltsgerät kann zumindest als Mikrowelle, Backofen, Heißluftfritteuse, Staubsauger, Robotersauger (dargestellt in Figur 3) oder als Küchenmaschine (dargestellt in Fig. 2) ausgebildet sein.

Zur Bestimmung 110 der Umgebungslautstärke 111 kann das elektrische Haushaltsgerät über zumindest über einen Sensor 210 verfügen oder ein von dem elektrischen Haushaltsgerät 200 zuzubereitendes Rezept nutzen.

Es kann vorgesehen sein, dass der Sensor 210 zumindest ausgeführt ist als
- ein Mikrofon 211,
- eine Waage 212,
- ein Gyroskop 213,
- eine Kamera 214,
- ein Vibrationssensor 215,
- eine Datenschnittstelle 216, über die eine Zustandsinformation eines externen Geräts empfangbar ist,
- eine Benutzerschnittstelle 217, die dazu ausgeführt ist, Eingaben des Benutzers zu erfassen.

Ebenfalls dargestellt in der Figur 2 ist ein System 400 zur Ausgabe eines Audiosignals 20, umfassend:
ein elektrisches Haushaltsgerät 200, insbesondere ausgeführt zur Ausführung eines erfindungsgemäßen Verfahrens 100, umfassend eine Recheneinheit 220, die dazu ausgeführt ist,
   - eine Umgebungslautstärke 111 zu bestimmen,
   - eine Ausgabelautstärke 121 zu berechnen 120, wobei die Umgebungslautstärke 111 die Ausgabelautstärke 121 zumindest teilweise bestimmt, und
   - das Audiosignal 20 mit der Ausgabelautstärke 121 auszugeben,
sowie ein von dem elektrischen Haushaltsgerät 200 externes Gerät 300, dass zum Ausgeben 130 des Audiosignals 20 mit der Ausgabelautstärke 121 ausgeführt ist.

Das externe Gerät 300 kann wie dargestellt ein, insbesondere über Bluetooth ansteuerbarer, Lautsprecher 270 sein. Alternativ oder in Ergänzung kann das externe Gerät 300 auch als zumindest als ein Tablet, Computer, Smartphone, Smart Watch, Kopfhörer oder Fernseher ausgeführt sein.

Das externe Gerät 300 kann ferner zumindest einen Sensor 210 aufweisen, der dazu ausgeführt ist, die Umgebungslautstärke 111 zu bestimmen. Insbesondere kann es sich bei dem Sensor 210 um ein Mikrofon 211 handeln.

Figur 3 zeigt ein elektrisches Haushaltsgerät 200 in Form eines Saugroboters. Wie zu erkennen ist, ist dort das Bearbeitungswerkzeug 230 zumindest als rotierende Bürste ausgeführt. Die Bürste kann sowohl seitlich angeordnet und dazu ausgeführt sein, einer Saugöffnung Schmutz zuzuführen. Alternativ oder in Ergänzung kann ebenfalls vorgesehen sein, dass die Bürste an der Saugöffnung auf einer Rolle angeordnet und insbesondere dazu ausgeführt ist, Schmutz von einem Untergrund anzuheben, sodass dieser leichter angesaugt werden kann. Ferner kann auch eine Saugöffnung des Saugroboters als Bearbeitungswerkzeug aufgefasst werden. Im Übrigen gelten die Ausführungen, die bereits im Zusammenhang mit dem elektrischen Haushaltsgerät 200 in Form einer Küchenmaschine, wie sie in Figur 2 gemacht wurden, auch für den Saugroboter.

In den Figuren 4, 5 und 6 sind schließlich drei Verläufe von Umgebungslautstärken 111 und Ausgabelautstärken 121 gezeigt. Die X-Achse kann als Zeitachse oder einer anderen, die Umgebungslautstärke 111 beeinflussende Größe wie etwa der Motordrehzahl aufgefasst werden.

In den Figuren 4, 5 und 6 ist deutlich zu erkennen, dass die auf der Y-Achse dargestellte Umgebungslautstärke 111 im Verlauf ansteigt. Im tatsächlich gemessenen Beispiel wurde dabei die Drehzahl des Motors 250 des elektrischen Haushaltsgerätes 200 erhöht. Die Umgebungslautstärke 111 könnte aber auch beispielsweise durch die Inbetriebnahme eines weiteren elektrischen Haushaltsgerätes 200 oder das Lauterdrehen eines Radios erhöht sein.

Ebenfalls zu sehen ist, wie die Ausgabelautstärke 121, insbesondere proportional, angepasst wird. Diese liegt im oberen und unteren Graphen stets oberhalb der Umgebungslautstärke 111. So wird sichergestellt, dass das Audiosignal 20 gut hörbar ist. Im mittleren Graphen erreicht die Ausgabelautstärke 121 hingegen einen Maximalwert, welcher auch bei einer höheren Umgebungslautstärke 111 nicht überschritten wird.

In Figur 6 ist außerdem gezeigt, dass die Ausgabelautstärke 121 zur Umgebungslautstärke 111 mit zumindest einem Faktor angepasst wird. Dieser Faktor kann insbesondere durch einen Benutzer, insbesondere über eine Benutzerschnittstelle 217, wählbar sein. Im gezeigten Beispiel wird die Steilheit der Anpassung beeinflusst. Beispielhaft gezeigt sind eine leichte Anpassung der Lautstärke 122, eine mittlere Anpassung der Lautstärke 123 und eine starke Anpassung der Lautstärke 124.

Die gezeigten Messpunkte beruhen auf Versuchen mit einer ähnlich zu wie in Figur 2 dargestellten elektrischen Haushaltsgerätes 200, bei der einem Mixgefäß 260 Wasser durch ein Bearbeitungswerkzeug 230 gerührt wurde. Die unterschiedlichen Messwerte ergeben sich durch den Füllstand des Mixgefäßes 260. Im obersten Graphen sind 2,2 I, im mittleren 1,5 und im untersten ein leerer Topf gezeigt, wobei hierzu weniger Datenpunkte dargestellt sind, um die Darstellung zu vereinfachen.

Hieraus wird deutlich, dass beispielsweise auch eine Waage 212 als Sensor 210 geeignet sein kann, um eine Berechnung der Ausgabelautstärke 121 durchzuführen. Der Fachmann erkennt darüber hinaus eine Vielzahl an Einflussgrößen auf die Umgebungslautstärke 111, welche durch entsprechende Sensoren 210 erfassbar oder über Modelle berechnet werden können.

Es kann beispielsweise vorgesehen sein, dass abhängig von der Menge sowie einer Drehstufe des Motors 250 die Ausgabelautstärke 121 von einer voreingestellter Ausgabelautstärke bis zu einem maximalen Wert erhöht wird. Insbesondere kann dabei berücksichtigt werden, dass es dabei nicht zu einer Übersteuerung kommt des Lautsprechers 270 kommt. Die Anpassung kann schrittweise, insbesondere in 5 dB Schritten erfolgen. In Abhängigkeit der Drehstufen kann die Anpassung erfolgen als:
- 0 db bei stehendem Motor (ohne störende Umgebungsgeräusche),
- 5 db bei Drehstufe bis 3,
- 5 db pro Erhöhung der Drehstufe bis zu einem Maximalwert der Drehstufe.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Lebensmittel
- 20: Audiosignal

- 100: Verfahren
- 110: Bestimmung
- 111: Umgebungslautstärke
- 120: Berechnen
- 121: Ausgabelautstärke
- 122: leichte Anpassung der Lautstärke
- 123: mittlere Anpassung der Lautstärke
- 124: starke Anpassung der Lautstärke
- 130: Ausgeben

- 200: elektrisches Haushaltsgerät
- 210: Sensor
- 211: Mikrofon
- 212: Waage
- 213: Gyroskop
- 214: Kamera
- 215: Vibrationssensor
- 216: Datenschnittstelle
- 217: Benutzereingabeschnittstelle
- 220: Lüfters
- 230: Bearbeitungswerkzeug
- 240: Basis
- 250: Motor
- 260: Mixgefäß
- 270: Lautsprecher

- 300: externes Gerät

- 400: System

## Patentansprüche

1. Verfahren (100) zur Ausgabe eines Audiosignals (20) bei einem elektrischen Haushaltsgerät (200), umfassend:
- Bestimmung (110) einer Umgebungslautstärke (111),
- Berechnen (120) einer Ausgabelautstärke (121), wobei die Umgebungslautstärke (111) die Ausgabelautstärke (121) zumindest teilweise bestimmt,
- Ausgeben (130) des Audiosignals (20) mit der Ausgabelautstärke (121).

2. Verfahren (100) nach Anspruch 1,
**dadurch gekennzeichnet,**
**dass** die Bestimmung (110) der Umgebungslautstärke (111) zumindest über einen Sensor (210) oder aus einer von dem elektrischen Haushaltsgerät (200) durchzuführenden Tätigkeit, insbesondere einem zuzubereitenden Rezept oder eines Saugprogramms, erfolgt.

3. Verfahren (100) nach Anspruch 2,
**dadurch gekennzeichnet,**
**dass** der Sensor (210) zumindest ausgeführt ist als
- ein Mikrofon (211),
- eine Waage (212),
- ein Gyroskop (213),
- eine Kamera (214),
- ein Vibrationssensor (215),
- eine Datenschnittstelle (216), über die eine Zustandsinformation eines externen Geräts empfangbar ist,
- eine Benutzerschnittstelle (217), die dazu ausgeführt ist, Eingaben des Benutzers zu erfassen.

4. Verfahren (100) nach einem der vorhergehenden Ansprüche,
**dadurch gekennzeichnet,**
**dass** die von dem elektrischen Haushaltsgerät (200) durchzuführende Tätigkeit zumindest
- eine Zutat,
- eine Zubereitungsart,
- eine Saugleistung, insbesondere eine Saugstufe,
- eine Bürstendrehzahl , oder
- ein Bearbeitungswerkzeug (230) umfasst,
und diese(s) die Ausgabelautstärke (121) zumindest teilweise bestimmt.

5. Verfahren (100) nach einem der vorhergehenden Ansprüche,
**dadurch gekennzeichnet,**
**dass** die Ausgabelautstärke (121) zumindest abhängig oder proportional zur Umgebungslautstärke (111) angepasst wird.

6. Verfahren (100) nach einem der vorhergehenden Ansprüche,
**dadurch gekennzeichnet,**
**dass** die Ausgabelautstärke (121) zur Umgebungslautstärke (111) mit zumindest einem Faktor angepasst wird, wobei insbesondere der Faktor durch einen Benutzer, insbesondere über eine Benutzerschnittstelle (217), wählbar ist.

7. Verfahren (100) nach einem der vorhergehenden Ansprüche,
**dadurch gekennzeichnet,**
**dass** eine maximale Ausgabelautstärke (121) vorgesehen ist, welche beim Ausgeben (130) des Audiosignals (20) nicht überschritten wird.

8. Verfahren (100) nach einem der vorhergehenden Ansprüche,
**dadurch gekennzeichnet,**
**dass** die Ausgabelautstärke (121) ferner abhängig ist von einer Kategorie des Audiosignals (20), wobei insbesondere die Kategorie zumindest eine Warnung, einen Hinweis, eine Bestätigung, eine Sprachausgabe oder eine Musik umfasst.

9. Verfahren (100) nach einem der vorhergehenden Ansprüche,
**dadurch gekennzeichnet,**
**dass** das Ausgeben (130) des Audiosignals (20) mit der Ausgabelautstärke (121) zu einem von dem elektrischen Haushaltsgerät (200) externen Gerät (300) erfolgt.

10. Verfahren (100) nach Anspruch 10,
**dadurch gekennzeichnet,**
**dass** das externe Gerät (300) zumindest als ein Tablet, Computer, Smartphone, Smart Watch, Kopfhörer, Lautsprecher, oder Fernseher ausgeführt ist.

11. Verfahren (100) nach einem der vorhergehenden Ansprüche,
**dadurch gekennzeichnet,**
**dass** die Ausgabelautstärke (121) zumindest teilweise bestimmt wird durch zumindest:
- eine Drehzahl eines Motors (250) des elektrischen Haushaltsgerätes (200),
- eine Drehrichtung des Motors (250),
- ein zu verarbeitendes Lebensmittel (10),
- eine Drehzahl eines Lüfters (220) des elektrischen Haushaltsgerätes (200),
- einem, insbesondere tauschbaren, Bearbeitungswerkzeug (230) des elektrischen Haushaltsgerätes (200),
- eine Saugleistung, insbesondere eine Saugstufe,
- eine Bürstendrehzahl,
- einem Umfeldgeräusch.

12. Verfahren (100) nach einem der vorhergehenden Ansprüche,
**dadurch gekennzeichnet,**
**dass** das Audiosignal (20) zumindest umfasst:
- einen Warnton,
- einen Hinweiston,
- eine akustische Bestätigung,
- eine Sprachausgabe nach einer manuellen Eingabe,
- eine Sprachausgabe als Reaktion auf eine Spracheingabe bei der Sprachsteuerung.

13. Elektrisches Haushaltsgerät (200), insbesondere ausgeführt zur Ausführung eines Verfahrens (100) nach einem der vorhergehenden Ansprüche, umfassend eine Recheneinheit (220), die dazu ausgeführt ist,
- eine Umgebungslautstärke (111) zu bestimmen,
- eine Ausgabelautstärke (121) zu berechnen (120), wobei die Umgebungslautstärke (111) die Ausgabelautstärke (121) zumindest teilweise bestimmt, und
- das Audiosignal (20) mit der Ausgabelautstärke (121) auszugeben.

14. System (400) zur Ausgabe eines Audiosignals (20), umfassend:
ein elektrisches Haushaltsgerät (200), insbesondere ausgeführt zur Ausführung eines Verfahrens (100) nach einem der vorhergehenden Ansprüche, umfassend eine Recheneinheit (220), die dazu ausgeführt ist,
- eine Umgebungslautstärke (111) zu bestimmen,
- eine Ausgabelautstärke (121) zu berechnen (120), wobei die Umgebungslautstärke (111) die Ausgabelautstärke (121) zumindest teilweise bestimmt, und
- das Audiosignal (20) mit der Ausgabelautstärke (121) auszugeben,
sowie ein von dem elektrischen Haushaltsgerät (200) externes Gerät (300), dass zum Ausgeben (130) des Audiosignals (20) mit der Ausgabelautstärke (121) ausgeführt ist.

15. Computerprogrammprodukt, umfassend Befehle, die bei der Ausführung des Programms durch einen Computer, insbesondere durch eine Recheneinheit (220) zumindest einem elektrischen Haushaltsgerät (200) nach Anspruch 13 oder eines Systems (400) nach Anspruch 14, diesen veranlassen, ein Verfahren nach einem der Ansprüche 1 bis 12 auszuführen.
